# EUROPÄISCHE PATENTSCHRIFT

(11) **EP 3 328 619 B1**
(45) Veröffentlichungstag und Bekanntmachung des Hinweises auf die Patenterteilung: **03.08.2022**
(21) Anmeldenummer: 16794643.3
(22) Anmeldetag: 11.11.2016
(51) Int. Cl.: B29C 67/00, B22F 3/105, B33Y 10/00, B33Y 30/00, B33Y 50/02

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCÉDÉ ET DISPOSITIF DE FABRICATION D'UN OBJET TRIDIMENSIONNEL

(30) Priorität: 13.11.2015 DE 102015222456
(43) Veröffentlichungstag der Anmeldung: 06.06.2018
(73) Patentinhaber: EOS GmbH Electro Optical Systems, 82152 Krailling (DE)
(72) Erfinder: BAUMANN, Andreas, 82166 Gräfelfing (DE)
(74) Vertreter: Prüfer & Partner mbB Patentanwälte · Rechtsanwälte
(86) Internationale Anmeldenummer: PCT/EP2016/077498
(87) Internationale Veröffentlichungsnummer: WO 2017/081293

(56) Entgegenhaltungen:
- EP-A1- 2 431 113
- EP-A1- 3 131 740
- WO-A1-92/08592
- DE-A1-102004 031 881
- US-A1- 2014 175 708

## Beschreibung

Die vorliegende Erfindung bezieht sich auf ein Verfahren und eine Vorrichtung zum Herstellen eines dreidimensionalen Objekts durch schichtweises Aufbringen und selektives Verfestigen eines Aufbaumaterials.

Verfahren und Vorrichtungen dieser Art werden beispielsweise beim Rapid Prototyping, Rapid Tooling und Additive Manufacturing verwendet. Ein Beispiel eines solchen Verfahrens ist als "Selektives Lasersintern" oder "Selektives Laserschmelzen" bekannt. Dabei wird wiederholt eine dünne Schicht eines pulverförmigen Aufbaumaterials auf ein Baufeld aufgebracht und das Aufbaumaterial in jeder Schicht durch selektives Bestrahlen mit einem Laserstrahl selektiv verfestigt, d.h. das Aufbaumaterial wird an diesen Stellen an- oder aufgeschmolzen und erstarrt unter Bildung eines Materialverbundes. Eine Verfestigungsstelle ist in diesem Sinne ein Ort, der diesem Prozess unterzogen wird, d.h. an dem das An- oder Aufschmelzen (aktuell) erfolgt.

Die Druckschrift DE 195 14 740 C1 beschreibt ein Verfahren zum Herstellen eines dreidimensionalen Objekts mittels selektivem Lasersintern oder Laserschmelzen sowie eine Vorrichtung zum Durchführen dieses Verfahrens.

Die Druckschrift DE 198 53 947 C1 beschreibt eine Prozesskammer für das selektive Lasersintern oder Laserschmelzen, in deren Seitenwänden Einlass- und Auslassöffnungen für ein Schutzgas angeordnet sind, das die Prozesskammer durchströmt.

Die Druckschrift DE 10 2004 031 881 A1 betrifft eine Vorrichtung zum Absaugen von Gasen, Dämpfen und/oder Partikeln aus einem Arbeitsbereich einer Laserbearbeitungsmaschine mit mindestens einer Absaugöffnung, wobei die mindestens eine Absaugöffnung mit einer einen Unterdruck erzeugenden Einrichtung verbunden ist.

Die US 2014/0175708 schreibt eine Bauvorrichtung für ein dreidimensionales Objekt, die eine Pulveraustrageeinheit, die Pulver auf einen Objektbaubereich austrägt, eine Pulverabflachungsvorrichtung, die das von der Pulveraustrageeinheit (3) ausgetragene Pulver abflacht, um eine Pulverschicht zu bilden, eine Lichtäbstrahlungseinheit, die oberhalb des Objektbauteils angeordnet ist und einen Lichtstrahl auf die Pulverschicht abstrahlt, um das Pulver zu sintern oder festzuschmelzen, sowie eine Rauchabsaugöffnung zum Absaugen von innerhalb der Abdeckung erzeugtem Rauch enthält.

Die WO 92/08592 A1 beschreibt eine Vorrichtung zur generativen Herstellung von Objekten mit einer Kammer, in der ein Gas auf den Arbeitsbereich gerichtet wird und Auslässe an den Seiten des Arbeitsbereichs vorgesehen sind.

Beim Verfestigen von pulverförmigem Aufbaumaterial entstehen je nach Art des verwendeten Materials, insbesondere beim Sintern oder Schmelzen von Metallpulver, sogenannte Spratzer. Bei der Bildung von Spratzern wird Material aus der an- oder aufgeschmolzenen Stelle herausgerissen. Auch andere Verunreinigungen, beispielsweise Rauch, Kondensate und/oder andere gasförmige oder feste Stoffe, werden an der Verfestigungsstelle freigesetzt. Gebildete Spratzer, Rauch und Kondensate sowie freigesetzte gasförmige oder feste Stoffe können zu Verschmutzungen der Vorrichtung führen. Gebildete Spratzer, Rauch und Kondensate sowie freigesetzte gasförmige oder feste Stoffe führen darüber hinaus zu einer teilweisen Absorption und/oder teilweisen Streuung und damit zu einem teilweisen Verlust der zu dessen selektiver Verfestigung auf das Aufbaumaterial gerichteten Strahlung.

Eine Aufgabe der vorliegenden Erfindung besteht darin, ein verbessertes Verfahren bzw. eine verbesserte Vorrichtung zum Herstellen eines dreidimensionalen Objekts durch schichtweises Aufbringen und selektives Verfestigen eines Aufbaumaterials bereitzustellen. Insbesondere bevorzugt wird dabei darauf abgezielt, störende Verunreinigungen in kritischen Bereichen der Vorrichtung, speziell im Strahlengang des Strahls, weitestgehend zu vermeiden, bzw. rasch aus kritischen Bereichen zu entfernen.

Die Aufgabe wird gelöst durch ein Verfahren gemäß Anspruch 1, ein Computerprogramm gemäß Anspruch 10, eine Steuereinrichtung gemäß Anspruch 11, einen Aus- und/oder Nachrüstsatz gemäß Anspruch 12 bzw. eine Vorrichtung gemäß Anspruch 13.

Weiterbildungen der Erfindung sind in den Unteransprüchen angegeben, wobei die in den Unteransprüchen zu einer Anspruchskategorie genannten Merkmale und die auf den zu einer Anspruchskategorie gehörigen Gegenstand bezogenen untenstehenden Merkmale auch als Weiterbildung des Gegenstands jeder anderen Anspruchskategorie verstanden werden können.

Bei dem erfindungsgemäßen Verfahren handelt es sich um ein Verfahren zum Herstellen eines dreidimensionalen Objekts durch schichtweises Aufbringen und selektives Verfestigen eines Aufbaumaterials. Das Verfahren umfasst die Schritte des Aufbringens einer Schicht des Aufbaumaterials auf ein Baufeld in einer Prozesskammer und des selektiven Verfestigens der Stellen der aufgebrachten Schicht, die dem Querschnitt des Objekts in dieser Schicht entsprechen, mittels Einwirkung einer Strahlung. Die Schritte des Aufbringens und des selektiven Verfestigens werden wiederholt, bis das dreidimensionale Objekt fertiggestellt ist. Oberhalb des Baufelds ist in der Prozesskammer ein Hohlkörper angeordnet, welcher sich im Wesentlichen vom Baufeld in Richtung der Oberseite der Wandung der Prozesskammer (bevorzugt im Wesentlichen bis hin zu dieser Oberseite) erstreckt. Der Hohlkörper wird hier verstanden als Körper mit im Wesentlichen fester Gestalt, der einen Hohlraum als ein Inneres des Hohlkörpers zumindest teilweise umschließt. Eine Struktur des Hohlkörpers selbst kann dabei hohl oder massiv ausgebildet sein. Es wird der Prozesskammer derart Gas zugeführt und es wird aus der Prozesskammer derart Gas abgeführt, dass in dem Bereich der Prozesskammer, der innerhalb des Hohlkörpers liegt, ein geringerer Druck herrscht als in dem Bereich der Prozesskammer, der außerhalb des Hohlkörpers liegt. Mit anderen Worten wird eine Druckdifferenz zwischen dem Hohlkörper (niedrigerer Druck) und dem Innenbereich der Prozesskammer, der außerhalb des Hohlkörpers liegt (höherer Druck), erzeugt. Die Vorteile dieser Druckdifferenz lassen sich wie folgt veranschaulichen:
Der relative Unterdruck im Hohlkörper bewirkt eine gezielte Gasströmung in Richtung des Inneren des Hohlkörpers.

Das Gas strömt aus dem Bereich der Prozesskammer, der außerhalb des Hohlkörpers liegt, durch einen Spalt zwischen dem Baufeld und der Unterseite des Hohlkörpers in den Bereich der Prozesskammer, der innerhalb des Hohlkörpers liegt. Zusätzlich oder alternativ ist die einem in einer Wandung der Prozesskammer angeordneten Einkoppelfenster zugewandte Oberseite des Hohlkörpers zumindest teilweise offen ausgeführt, sodass Gas aus dem Bereich der Prozesskammer, der außerhalb des Hohlkörpers liegt, durch einen Spalt zwischen der Oberseite der Wandung der Prozesskammer und der Oberseite des Hohlkörpers in den Bereich der Prozesskammer, der innerhalb des Hohlkörpers liegt, strömt.

Dadurch wird beispielsweise die Verunreinigung von in der Prozesskammer angebrachten Bauteilen durch Spratzer, Rauch, Kondensate und/oder andere gasförmige oder feste Stoffe verringert oder vermieden. Dies reduziert beispielsweise den Aufwand der Reinigung dieser Bauteile.

Außerdem werden dadurch beispielsweise Spratzer, Rauch, Kondensate und/oder andere gasförmige oder feste Stoffe rasch aus dem Bereich der Prozesskammer, durch den die Strahlung hindurchtreten muss, um auf das Baufeld zu gelangen, abgeführt.

Es kann potenziell (aber nicht zwangsweise) auf eine starke Gasströmung über dem Baufeld verzichtet werden, wodurch vermieden wird, dass Partikel der aufgebrachten Schicht von der Gasströmung mitgerissen werden. Das Mitreißen von Partikeln der aufgebrachten Schicht würde sich ggf. nachteilig auf die Eigenschaften des herzustellenden Objekts auswirken.

Der genannte Hohlkörper ist beispielsweise so ausgebildet, dass er im Wesentlichen geschlossene Seitenwände aufweist und sowohl an einer dem Baufeld zugewandten Unterseite als auch an einer der Oberseite der Wandung der Prozesskammer, d. h. der Prozesskammerdecke, zugewandten Oberseite zumindest teilweise offen ausgeführt ist. Er erstreckst sich im Wesentlichen vom Baufeld bis zur Oberseite der Wandung der Prozesskammer, sodass zwischen der Unterseite des Hohlkörpers und dem Baufeld bzw. der Oberseite des Hohlkörpers und der Oberseite der Wandung der Prozesskammer Spalte vorhanden sind. Die Spalte sind dabei so ausgebildet, dass Gas in Form einer gezielten, gerichteten Gasströmung durch die Spalte in das Innere des Hohlkörpers strömt, wenn außerhalb des Hohlkörpers ein höherer Druck herrscht als innerhalb. Die Gasströmung ist dabei insbesondere so beschaffen, dass im Inneren des Hohlkörpers vorhandene Spratzer, Rauch und Kondensate sowie freigesetzte gasförmige oder feste Stoffe sich nicht gegen die Gasströmung durch die Spalte bewegen können.

Bevorzugt wird dem Hohlkörper derart Gas zu- und/oder abgeführt, dass innerhalb des Hohlkörpers ein Gasdruck unterhalb des mittleren atmosphärischen Drucks der Erde vorliegt. Eine solche Unterdruck- bzw. Vakuumanwendung hat unter anderem das Potenzial einer höheren Prozessstabilität. Durch die lokal begrenzte Anwendung des Unterdrucks bzw. Vakuums in dem Hohlkörper lässt sich der Aufwand zum Erzeugen und Aufrechterhalten eines Unterdrucks oder Vakuums erheblich verringern und der Effekt genau am vorgesehenen Wirkort (also im Bereich des Baufelds) trotzdem vollständig realisieren.

Was den Gasdruck in dem Bereich der Prozesskammer angeht, der außerhalb des Hohlkörpers liegt, so wird dieser so angelegt, dass er größer oder gleich dem Druck außerhalb der Prozesskammer ist. Außerhalb der Prozesskammer herrscht typischerweise der atmosphärische Umgebungsdruck.

Prinzipiell ist die räumliche Anordnung der Strahlungsquelle im Rahmen der Erfindung frei wählbar. Bevorzugt ist es, dass die Strahlung mittels einer außerhalb der Prozesskammer angeordneten Bestrahlungseinrichtung erzeugt und durch ein an der Oberseite einer Wandung der Prozesskammer angeordnetes Einkoppelfenster in die Prozesskammer (und weiter in den Hohlkörper) eingekoppelt wird. Hierdurch ist eine effektive räumliche Trennung der entsprechenden Optikelemente von der Prozesskammer, in der ja potenziell störende Partikel entstehen, möglich. Vorzugsweise wird das erfindungsgemäße Verfahren so ausgeführt, dass Gas durch eine über eine Gasabströmöffnung mit dem Inneren des Hohlkörpers verbundene Gasabströmleitung aus der Prozesskammer abgeführt wird. Dadurch wird beispielsweise fortwährend verunreinigtes Gas aus der Prozesskammer, und zwar direkt aus dem Hohlkörper, abgeführt. Dieses kann entsorgt oder einer Gasreinigungsanlage (z.B. einem Filter) zugeführt werden. Vorzugsweise wird das erfindungsgemäße Verfahren so ausgeführt, dass der Prozesskammer Gas durch eine über eine Gaszuströmöffnung mit dem Bereich der Prozesskammer, der außerhalb des Hohlkörpers liegt, verbundene Gaszuströmleitung zugeführt wird. Dadurch wird beispielsweise der Prozesskammer fortwährend frisches Gas zugeführt.

Vorzugsweise wird das erfindungsgemäße Verfahren so ausgeführt, dass der Prozesskammer (ggf. zusätzlich zur im vorherigen Absatz erwähnten Gasführung) Gas durch eine über eine (ggf. weitere) Gaszuströmöffnung mit dem Inneren des Hohlkörpers verbundene Gaszuströmleitung zugeführt wird. Dadurch kann beispielsweise im Inneren des Hohlkörpers eine Gasströmung erzeugt werden, die dort zielgerichtet und lokal ein Austreten von Spratzern, Rauch, Kondensaten und/oder anderen freigesetzten gasförmigen oder festen Stoffen aus dem Hohlkörper verringert oder verhindert, wodurch eine Verunreinigung von Bauteilen, die innerhalb der Prozesskammer (jedoch außerhalb des Hohlkörpers) angeordnet sind, verringert oder verhindert wird.

Vorzugsweise wird das erfindungsgemäße Verfahren so ausgeführt, dass das der Prozesskammer durch eine über die Gaszuströmöffnung mit dem Inneren des Hohlkörpers verbundene Gaszuströmleitung zugeführte Gas in Form einer im Wesentlichen laminaren Strömung durch den der dem Hohlkörper zugewandten Oberfläche des Einkoppelfensters benachbarten Bereich des Inneren des Hohlkörpers geführt wird. Dadurch werden beispielsweise Verunreinigungen des Einkoppelfensters verringert oder verhindert.

Im Rahmen der in den letzten beiden Absätzen beschriebenen Ausführungsformen ist es bevorzugt, dass ein erster Anteil des Gases über die mit dem Inneren des Hohlkörpers verbundene Gaszuströmöffnung zugeführt wird und ein zweiter Anteil des Gases über eine weitere Gaszuströmöffnung in den Bereich der Prozesskammer außerhalb des Hohlkörpers geleitet wird. Dies kann beispielsweise vorteilhaft dadurch erfolgen, dass der erste Anteil und der zweite Anteil des Gases aus einem gemeinsamen Gasstrom durch eine Gasabzweigung, bevorzugt in einer Vorkammer des Hohlkörpers, voneinander abgezweigt werden.

Vorzugsweise wird das erfindungsgemäße Verfahren so ausgeführt, dass das Aufbringen einer Schicht des Aufbaumaterials auf das Baufeld mittels eines sich in horizontaler Richtung bewegenden Beschichters durchgeführt wird und der Hohlkörper und der Beschichter in ihrer Bewegung gekoppelt sind. Dadurch wird beispielsweise erreicht, dass der Hohlkörper die Bewegung des Beschichters nicht behindert.

Das erfindungsgemäße Computerprogramm ist in eine programmierbare Steuereinrichtung ladbar und enthält Programmcodemittel, um alle Schritte des erfindungsgemäßen Verfahrens auszuführen, wenn das Computerprogramm auf der Steuereinrichtung ausgeführt wird. Dadurch ist es möglich, das erfindungsgemäße Verfahren programmgestützt durchzuführen.

Bei der erfindungsgemäßen Steuereinrichtung handelt es sich um eine Steuereinrichtung für eine Vorrichtung zum Herstellen eines dreidimensionalen Objekts durch schichtweises Aufbringen und selektives Verfestigen eines Aufbaumaterials. Diese Vorrichtung führt im Betrieb folgende Schritte aus: Aufbringen einer Schicht des Aufbaumaterials auf ein Baufeld in einer Prozesskammer, selektives Verfestigen der Stellen der aufgebrachten Schicht, die dem Querschnitt des Objekts in dieser Schicht entsprechen, mittels Einwirkung einer Strahlung und Wiederholen der Schritte des Aufbringens und des selektiven Verfestigens, bis das dreidimensionale Objekt fertiggestellt ist. Dabei ist in der Prozesskammer oberhalb des Baufeldes ein Hohlkörper angeordnet, welcher sich im Wesentlichen vom Baufeld in Richtung der Oberseite der Wandung der Prozesskammer erstreckt. Die erfindungsgemäße Steuereinrichtung ist dazu ausgebildet, der Prozesskammer derart Gas zuzuführen und derart Gas aus der Prozesskammer abzuführen, dass in dem Bereich der Prozesskammer, der innerhalb des Hohlkörpers liegt, ein geringerer Druck herrscht als in dem Bereich der Prozesskammer, der außerhalb des Hohlkörpers liegt. Hierzu ist die Steuereinrichtung dadurch ausgebildet, dass sie im Betrieb die entsprechenden Steuerbefehle generiert. Dadurch wird eine Steuereinrichtung bereitgestellt, die in der Lage ist, eine Vorrichtung zum Herstellen eines dreidimensionalen Objekts so zu steuern, dass sie das erfindungsgemäße Verfahren durchführt.

Der erfindungsgemäße Aus- und/oder Nachrüstsatz besteht aus einem Hohlkörper, der für die Verwendung im erfindungsgemäßen Verfahren geeignet ist, und einer erfindungsgemäßen Steuereinrichtung. Dadurch ist es möglich, eine Vorrichtung zum Herstellen eines dreidimensionalen Objekts durch schichtweises Aufbringen und selektives Verfestigen eines Aufbaumaterials, mit der das erfindungsgemäße Verfahren nicht ausgeführt werden kann, so nachzurüsten, dass das Verfahren ausgeführt werden kann.

Bei der erfindungsgemäßen Vorrichtung handelt es sich um eine Vorrichtung zum Herstellen eines dreidimensionalen Objekts durch schichtweises Aufbringen und selektives Verfestigen eines Aufbaumaterials mit einer Aufbringvorrichtung zum Aufbringen einer Schicht des Aufbaumaterials auf ein Baufeld in einer Prozesskammer der Vorrichtung, einer Bestrahlungseinrichtung zum selektiven Verfestigen der Stellen der aufgebrachten Schicht, die dem Querschnitt des Objekts in dieser Schicht entsprechen, mittels Einwirkung einer Strahlung und mit einem erfindungsgemäßen Aus- und/oder Nachrüstsatz. Dadurch wird eine Vorrichtung bereitgestellt, mit der das erfindungsgemäße Verfahren ausgeführt werden kann.

Weitere Merkmale und Zweckmäßigkeiten der Erfindung ergeben sich aus der Beschreibung von Ausführungsbeispielen für die erfindungsgemäße Vorrichtung unter Bezugnahme auf die beigefügten Zeichnungen.
- Fig. 1: ist eine schematische im Schnitt dargestellte Ansicht einer Vorrichtung zum schichtweisen Herstellen eines dreidimensionalen Objekts gemäß einem Ausführungsbeispiel der vorliegenden Erfindung.
- Fig. 2: ist eine schematische im Schnitt dargestellte vereinfachte Ansicht der in Fig. 1 dargestellten Vorrichtung.
- Fig. 3: ist eine schematische perspektivische Ansicht eines Hohlkörpers als Bestandteil eines weiteren Ausführungsbeispiels der vorliegenden Erfindung.

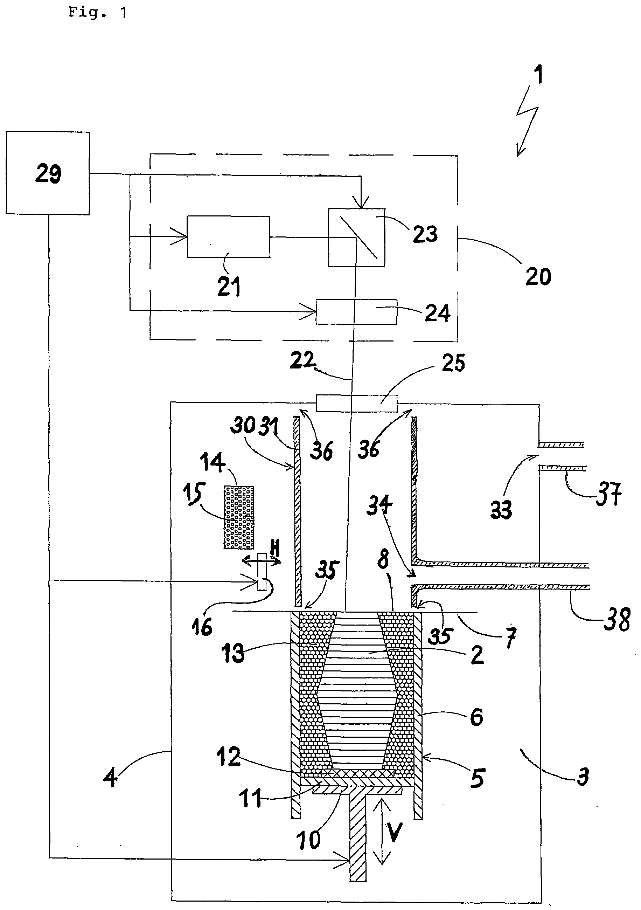

Die in Fig. 1 dargestellte Vorrichtung ist eine Lasersinter- oder Laserschmelzvorrichtung 1 zum Herstellen eines Objekts 2.

Die Lasersinter- oder Laserschmelzvorrichtung 1 enthält eine Prozesskammer 3 mit einer Kammerwandung 4. In der Prozesskammer 3 ist ein nach oben offener Behälter 5 mit einer Wandung 6 angeordnet. In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selbst aufgebaut werden, die dann als Bauplattform dient.

In Fig. 1 ist das in dem Behälter 5 auf der Bauplattform 12 zu bildende Objekt unterhalb einer Arbeitsebene 7 in einem Zwischenzustand dargestellt. Es besteht aus mehreren verfestigten Schichten und wird von unverfestigt gebliebenem Aufbaumaterial 13 umgeben.

Die Lasersinter- oder Laserschmelzvorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen von Schichten des Aufbaumaterials 15 auf ein Baufeld 8 in der Arbeitsebene 7. An ihrer Oberseite enthält die Wandung der Prozesskammer 3 ein Einkoppelfenster 25 zum Einkoppeln der Strahlung, die zum Verfestigen des Aufbaumaterials 15 dient, in die Prozesskammer 3.

Die Lasersinter- oder Laserschmelzvorrichtung 1 enthält ferner eine Bestrahlungseinrichtung 20 mit einem Laser 21, der einen Laserstrahl 22 erzeugt, der über eine Umlenkeinrichtung 23 umgelenkt und durch eine Fokussiereinrichtung 24 über das Einkoppelfenster 25 auf das Baufeld 8 in der Arbeitsebene 7 fokussiert wird.

Ferner enthält die Lasersinter- oder Laserschmelzvorrichtung 1 eine Steuereinrichtung 29, über die die einzelnen Bestandteile der Vorrichtung 1 in koordinierter Weise zum Durchführen des Bauprozesses gesteuert werden. Die Steuereinrichtung 29 kann eine CPU enthalten, deren Betrieb durch ein Computerprogramm (Software) gesteuert wird.

Die Lasersinter- oder Laserschmelzvorrichtung 1 ist ferner mit einem Hohlkörper 30 mit einer Wandung 31 ausgestattet, welcher innerhalb der Prozesskammer 3 oberhalb des Baufelds 8 angeordnet ist, welcher sich im Wesentlichen vom Baufeld 8 bis zur Oberseite der Prozesskammer 3 erstreckt und welcher zumindest an seiner dem Baufeld 8 zugewandten Unterseite teilweise offen ausgeführt ist.

Die Prozesskammer ist mit einer Gaszuströmleitung 37 und mit einer Gasabströmleitung 38 verbunden.

Bei dem in Fig. 1 gezeigten Ausführungsbeispiel ist die Gaszuströmleitung 37 über eine Gaszuströmöffnung 33 mit dem Bereich der Prozesskammer verbunden, der außerhalb des Hohlkörpers 30 liegt. Die Gaszuströmöffnung 33 ist an der Wandung 4 der Prozesskammer 3 vorgesehen. Die Gasabströmleitung 38 ist über eine Gasabströmöffnung 34 mit dem Bereich der Prozesskammer 3, der innerhalb des Hohlkörpers 30 liegt, verbunden.

Der Hohlkörper 30 weist beispielsweise im Wesentlichen die Form eines Zylinders auf, wobei der Begriff "Zylinder" im allgemeinen mathematischen Sinn verstanden wird. Für zylindrische Hohlkörper wird in Betracht gezogen, die Zylindergrundfläche im Wesentlichen kreisrund, oval oder polygonal, beispielsweise rechteckig, auszuführen, die Form der Zylindergrundfläche ist jedoch grundsätzlich keinen Beschränkungen unterworfen. Der Hohlkörper 30 kann eine beliebige Form aufweisen. Die Seitenwände des Hohlkörpers 30 reichen dabei im Wesentlichen vom Baufeld 8 bis zur Oberseite der Wandung 4 der Prozesskammer 3.

Der Hohlkörper 30 ist zumindest an seiner Unterseite offen ausgeführt. Dies kann, wie im Fall des in Fig. 1 gezeigten Ausführungsbeispiels, bedeuten, dass der Hohlkörper 30 an seiner Unterseite keine Wand aufweist, also nach unten hin mit der Unterkante seiner Seitenfläche bzw. den Unterkanten seiner Seitenflächen abschließt. Dabei wird bevorzugt, wenn die offen ausgeführte Unterseite des Hohlkörpers 30 und das Baufeld im Wesentlichen kongruent sind. Es wird im Rahmen der Erfindung jedoch auch in Betracht gezogen, den Hohlkörper 30 an seiner Unterseite in dem Sinne offen auszuführen, dass er an seiner Unterseite mit einer Wand, die eine Öffnung aufweist, ausgestattet ist. Dabei wird bevorzugt, wenn die Öffnung und das Baufeld 8 im Wesentlichen kongruent sind.

Die Unterseite des Hohlkörpers 30 ist dem Baufeld 8 zugewandt, und weist von diesem einen Abstand auf. Zwischen dem Baufeld 8 und der Unterseite des Hohlkörpers 30 besteht ein beispielsweise umlaufender oder bereichsweise vorliegender Spalt 35, welcher eine Verbindung zwischen dem Bereich der Prozesskammer 3, der innerhalb des Hohlkörpers 30 liegt, und dem Bereich der Prozesskammer 3, der außerhalb des Hohlkörpers 30 liegt, welche von Gas durchflossen werden kann, darstellt.

Bei dem in Fig. 1 dargestellten Ausführungsbeispiel ist der Hohlkörper 30 auch an seiner Oberseite offen ausgeführt, und zwar in dem Sinn, dass der Hohlkörper 30 an seiner Oberseite keine Wand aufweist, also nach oben hin mit der Oberkante seiner Seitenfläche bzw. den Oberkanten seiner Seitenflächen nach oben hin abschließt. Daher befindet sich auch zwischen der Oberseite des Hohlkörpers 30 und der Oberseite der Wandung 4 der Prozesskammer 3 ein beispielsweise umlaufender oder bereichsweise vorliegender Spalt 36. Dieser Spalt stellt eine weitere Verbindung zwischen dem Bereich der Prozesskammer 3, der innerhalb Hohlkörpers 30 liegt, und dem Bereich der Prozesskammer 3, der außerhalb des Hohlkörpers liegt, durch welchen Gas strömen kann, dar.

In einem anderen Ausführungsbeispiel ist der Hohlkörper 30 an seiner Oberseite nicht offen ausgeführt, d. h. im Wesentlichen gasdicht verschlossen. Die Oberseite des Hohlkörpers 30 ist dabei zumindest teilweise für die Strahlung durchlässig ausgebildet.

In einem Ausführungsbeispiel ist der genannte Hohlkörper 30 sowohl an seiner dem Baufeld 8 zugewandten Unterseite als auch an seiner der Oberseite der Wandung 4 der Prozesskammer 3 zugewandten Oberseite zumindest teilweise offen ausgeführt. Dabei erstreckt sich der Hohlkörper 30 im Wesentlichen vom Baufeld 8 bis zur Oberseite der Wandung 4 der Prozesskammer 3. Die Abstände zwischen der Unterseite des Hohlkörpers 30 und dem Baufeld 8 bzw. zwischen der Oberseite des Hohlkörpers 30 und der Oberseite der Wandung 4 der Prozesskammer 3 sind dabei so gewählt, dass zwischen der Unterseite des Hohlkörpers 30 und dem Baufeld 8 bzw. der Oberseite des Hohlkörpers 30 und der Oberseite der Wandung 4 der Prozesskammer 3 Spalte 35, 36 vorhanden sind. Die Spalte 35, 36 sind insbesondere umlaufend, d. h. entlang des gesamten Umfangs der Oberseite bzw. der Unterseite des Hohlkörpers 30 vorhanden. Die Spalte 35, 36 stellen eine räumliche Verbindung zwischen dem Inneren des Hohlkörpers 30 und dem Bereich der Prozesskammer 3, der außerhalb des Hohlkörpers 30 liegt, dar, durch welche Verbindung Gas strömen kann. Die Spalte 35, 36 sind dabei insbesondere klein, d. h. die Abstände zwischen der Unterseite des Hohlkörpers 30 und dem Baufeld 8 bzw. der Oberseite des Hohlkörpers 30 und der Oberseite der Wandung 4 der Prozesskammer 3 sind so gewählt, dass Gas in Form einer gezielten, gerichteten Gasströmung durch die Spalte 35, 36 in das Innere des Hohlkörpers 30 strömt, wenn außerhalb des Hohlkörpers 30 ein höherer Druck herrscht als innerhalb. Die Gasströmung ist dabei insbesondere so beschaffen, dass im Inneren des Hohlkörpers 30 vorhandene Spratzer, Rauch und Kondensate sowie freigesetzte gasförmige oder feste Stoffe sich nicht gegen die Gasströmung durch die Spalte 35, 36 bewegen können. Die Abstände zwischen der Unterseite des Hohlkörpers 30 und dem Baufeld 8 sind bevorzugt ≤ 50 mm, noch mehr bevorzugt ≤ 10 mm, insbesondere bevorzugt ≤ 1 mm. Die Abstände zwischen der Oberseite des Hohlkörpers 30 und der Oberseite der Wandung 4 der Prozesskammer 3 sind bevorzugt ≤ 10 mm, noch mehr bevorzugt ≤ 2 mm, insbesondere bevorzugt ≤ 0,5 mm.

Weiter bevorzugt erstreckt sich der Hohlkörper 30 über das gesamte Baufeld 8, sodass der vom Hohlkörper 30 umschlossene Hohlraum eine lichte Weite aufweist, die zumindest in einem unteren Bereich mindestens der Gesamtfläche des Baufelds 8 entspricht, und eine lichte Höhe aufweist, die im Wesentlichen dem Abstand zwischen dem Baufeld 8 und der Oberseite der Wandung 4 der Prozesskammer 3 entspricht. Dies hat den Vorteil, dass ein von der z. B. zentral über dem Baufeld 8 angeordneten Bestrahlungseinrichtung 20 ausgehender Laserstrahl 22 das gesamte Baufeld 8 durch Öffnungen an der Oberseite und an der Unterseite des Hohlkörpers 30 hindurch überstreichen kann, ohne dass der Hohlkörper 30 in Abhängigkeit von einer Orientierung des Laserstrahls 22 bewegt werden muss. Dabei weist der Hohlraum bzw. der Hohlkörper 30 insgesamt nicht notwendig eine quaderförmige Gestalt auf, sondern sein Querschnitt kann sich nach oben hin, d. h. zur Oberseite der Wandung 4 der Prozesskammer 3 hin, verjüngen. Beispielsweise kann der Hohlraum bzw. der Hohlkörper 30 auch eine pyramidale oder zeltartige oder kuppelförmige Gestalt aufweisen.

In einem weiteren Ausführungsbeispiel ist der genannte Hohlkörper 30 beweglich. Insbesondere ist der Hohlkörper 30 über dem Baufeld 8 in einer zum Baufeld 8 parallelen Richtung hin- und her bewegbar gelagert. Dies kann bevorzugt dadurch realisiert werden, dass der Hohlkörper 30 und der Beschichter 16 in ihrer Bewegung gekoppelt sind. Der Hohlkörper 30 ist dabei beispielsweise neben dem Beschichter 16 angeordnet, d. h. er befindet sich in Bewegungsrichtung des Beschichters 16 vor oder hinter dem Beschichter 16. Insbesondere ist der Hohlkörper 30 so angeordnet, dass er sich während eines Beschichtungsvorgangs hinter dem Beschichter 16 befindet. Um den Hohlkörper 30 und den Beschichter 16 in ihrer Bewegung zu koppeln, können der Hohlkörper 30 und der Beschichter 16 bevorzugt mechanisch miteinander verbunden werden.

Besonders bevorzugt werden die beiden zuletzt genannten Ausführungsbeispiele kombiniert, wobei der Hohlkörper 30 so ausgeführt ist, dass er während eines Beschichtungsvorgangs gemeinsam mit dem Beschichter 16 über das Baufeld 8 bewegt wird und dass zwischen der Unterseite des Hohlkörpers 30 und dem Baufeld 8 bzw. zwischen der Oberseite des Hohlkörpers 30 und der Oberseite der Wandung 4 der Prozesskammer 3, d. h. also der Prozesskammerdecke, Spalte 35, 36 vorhanden sind.

Der Hohlkörper 30 kann auch derart ausgebildet sein, dass er in einer vertikalen Richtung bewegbar, d. h. anhebbar und absenkbar ist. Daraus ergibt sich der Vorteil, dass der Beschichter 16 über das Baufeld 8 bewegt werden kann, ohne dass der Hohlkörper 30 gleichzeitig in einer horizontalen Richtung über das Baufeld 8 hin- und her bewegt werden muss.

Im Betrieb wird zunächst zum Aufbringen einer Pulverschicht der Träger 10 um eine Höhe abgesenkt, die bevorzugt der gewünschten Schichtdicke entspricht. Unter Verwendung des Beschichters 16 wird nun eine Schicht des pulverförmigen Aufbaumaterials 15 aufgetragen. Die Aufbringung erfolgt zumindest über den gesamten Querschnitt des herzustellenden Objekts 2, vorzugsweise über das gesamte Baufeld 8. Anschließend wird der Querschnitt des herzustellenden Objekts 2 von dem Laserstrahl 22 abgetastet, sodass das pulverförmige Aufbaumaterial 15 an diesen Stellen verfestigt wird. Die Schritte werden so lange wiederholt, bis das Objekt 2 fertiggestellt ist und aus dem Behälter 5 entnommen werden kann.

Der Hohlkörper 30 kann in einer zum Baufeld 8 im Wesentlichen parallelen Richtung über dem Baufeld 8 hin- und her bewegbar sein. Insbesondere sind dabei der Hohlkörper 30 und der Beschichter 16 in ihrer Bewegung gekoppelt, so dass sich der Hohlkörper 30 über das Baufeld 8 bewegt, wenn sich der Beschichter 16, beispielsweise im Zuge eines Beschichtungsvorgangs, über das Baufeld 8 bewegt und der Hohlkörper 30 ruht, wenn der Beschichter 16 ruht. Der Hohlkörper 30 bewegt sich dabei beispielsweise in Bewegungsrichtung des Beschichters 16 vor oder hinter dem Beschichter 16. Insbesondere bewegt sich dabei der Hohlkörper 30 während eines Beschichtungsvorgangs hinter dem Beschichter 30.

Der Hohlkörper 30 kann anhebbar und absenkbar gelagert sein. Beim Anheben wird der Abstand zwischen der Unterseite des Hohlkörpers 30 und dem Baufeld 8 vergrößert, beim Absenken verringert. Der Hohlkörper 30 wird angehoben, wenn der Beschichter 16, beispielsweise während eines Beschichtungsvorgangs, über das Baufeld 8 bewegt wird, so dass sich der Beschichter 16 unterhalb des Hohlkörpers 30 bewegen kann. Anschließend kann der Hohlkörper 30 wieder abgesenkt werden. So ist es möglich, dass der Beschichter 16 über das Baufeld 8 bewegt werden kann, ohne dass der Hohlkörper 30 über das Baufeld 8 hin- und her bewegt werden muss.

Während der Herstellung des Objekts 2 wird der Prozesskammer 3 Gas zugeführt und es wird Gas aus der Prozesskammer 3 abgeführt. Die Zuführung und die Abführung von Gas erfolgen derart, dass in dem Bereich der Prozesskammer 3, der innerhalb des Hohlkörpers 30 liegt, ein geringerer Druck herrscht als in dem Bereich der Prozesskammer 3, der außerhalb des Hohlkörpers 30 liegt. Dies wird bei dem in Fig. 1 dargestellten Ausführungsbeispiel einer Lasersinter- oder Laserschmelzvorrichtung 1 dadurch erreicht, dass der Prozesskammer Gas durch eine Gaszuströmleitung 37, welche über eine Gaszuströmöffnung 33 mit dem Bereich der Prozesskammer 3, der außerhalb des Hohlkörpers 30 liegt, verbunden ist, zugeführt wird, während aus der Prozesskammer 3 Gas durch eine Gasabströmleitung 38, welche über eine Gasabströmöffnung 34 mit dem Bereich der Prozesskammer, der innerhalb des Hohlkörpers 30 liegt, verbunden ist, abgeführt wird. Gas strömt durch den Spalt 35 und den Spalt 36 von dem Bereich der Prozesskammer 3, der außerhalb des Hohlkörpers 30 liegt, in den Bereich der Prozesskammer 3, der innerhalb des Hohlkörpers 30 liegt.

Dadurch wird beispielsweise die Verunreinigung von in der Prozesskammer angebrachten Bauteilen durch Spratzer, Rauch, Kondensate und/oder andere gasförmige oder feste Stoffe verringert oder vermieden, da durch die gerichtete Gasströmung im Wesentlichen sicher gestellt wird, dass sie nicht aus der Hohlkammer 30 austreten können. Dies reduziert beispielsweise den Aufwand der Reinigung dieser Bauteile.

Außerdem werden dadurch beispielsweise Spratzer, Rauch, Kondensate und/oder andere gasförmige oder feste Stoffe rasch aus dem Bereich der Prozesskammer, durch den die Strahlung hindurchtreten muss, um auf das Baufeld zu gelangen, abgeführt.

Es kann dabei auf eine übermäßig starke Gasströmung über dem Baufeld verzichtet werden, wodurch vermieden wird, dass Partikel der aufgebrachten Schicht von der Gasströmung mitgerissen werden. Das Mitreißen von Partikeln der aufgebrachten Schicht wirkt sich nachteilig auf die Eigenschaften des herzustellenden Objekts aus.

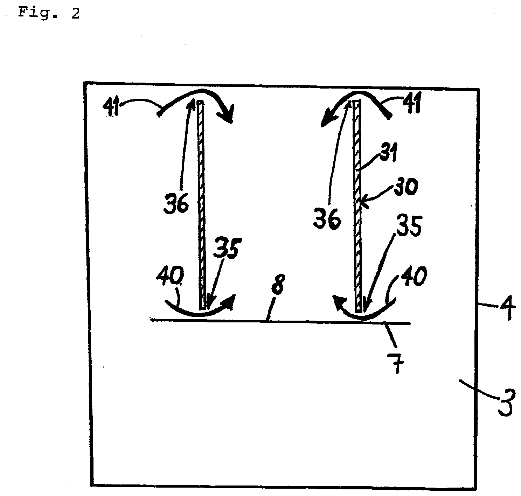

In Fig. 2 ist eine vereinfachte Darstellung der in Fig. 1 dargestellten Lasersinter- oder Laserschmelzvorrichtung 1 wiedergegeben, wobei der besseren Übersichtlichkeit halber die Gaszuströmleitung 37, die Gasabströmleitung 38 und weitere Bestandteile der Vorrichtung 1 nicht dargestellt sind. Die Pfeile 40 symbolisieren den Gasstrom von dem Bereich der Prozesskammer 3, der außerhalb des Hohlkörpers 30 liegt, durch den Spalt 35 in den Bereich der Prozesskammer 3, der innerhalb des Hohlkörpers 30 liegt. Die Pfeile 41 symbolisieren den Gasstrom von dem Bereich der Prozesskammer 3, der außerhalb des Hohlkörpers 30 liegt, durch den Spalt 36 in den Bereich der Prozesskammer 3, der innerhalb des Hohlkörpers 30 liegt.

Es lassen sich dabei gerichtete Gasströme erzeugen, die durch die Spalte 35, 36 führen und die gezielt verhindern, dass sich im Inneren des Hohlkörpers 30 vorhandene Spratzer, Rauch und Kondensate sowie freigesetzte gasförmige oder feste Stoffe gegen die Gasströmungen bewegen und so aus dem Inneren des Hohlkörpers 30 in den Bereich der Prozesskammer 3, der außerhalb des Hohlkörpers 30 liegt, gelangen können.

Wenn in einem anderen Ausführungsbeispiel einer Lasersinter- oder Laserschmelzvorrichtung 1 ein an seiner Oberseite geschlossen ausgeführter Hohlkörper 30 vorgesehen ist und folglich der Spalt 36 nicht vorhanden ist, strömt Gas aus dem Bereich der Prozesskammer 3, der außerhalb des Hohlkörpers 30 liegt, in den Bereich der Prozesskammer 3, der innerhalb des Hohlkörpers 30 liegt, lediglich durch den Spalt 35. Analoges gilt, wenn in einem weiteren Ausführungsbeispiel einer Lasersinter- oder Laserschmelzvorrichtung 1 ein an seiner Unterseite geschlossen ausgeführter Hohlkörper 30 vorgesehen ist und folglich der Spalt 35 nicht vorhanden ist: Dann strömt Gas aus dem Bereich der Prozesskammer 3, der außerhalb des Hohlkörpers 30 liegt, in den Bereich der Prozesskammer 3, der innerhalb des Hohlkörpers 30 liegt, lediglich durch den Spalt 36.

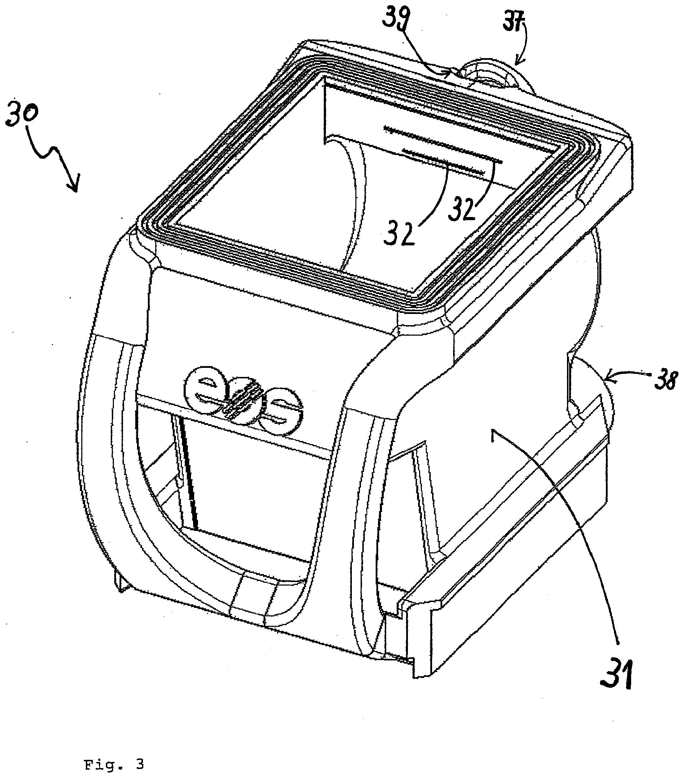

In Fig. 3 ist ein Hohlkörper 30 gemäß einem anderen Ausführungsbeispiel dargestellt. Der Hohlkörper 30 weist in seinem Inneren schlitzförmige Gaszuströmöffnungen 32 auf, die mit der Gaszuströmleitung 37 verbunden sind. Der Hohlkörper 30 ist über eine Gasabströmöffnung 34 (hier nicht gezeigt) mit einer Gasabströmleitung 38 verbunden. Der Hohlkörper 30 weist ferner an der Außenseite der Wandung 31 eine Gaszuströmöffnung 39 auf.

Im Betrieb wird dem Bereich der Prozesskammer 3, der innerhalb des Hohlkörpers 30 liegt, durch die Gaszuströmöffnungen 32 Gas zugeführt. Die Gaszuströmöffnungen 32 sind so ausgebildet, dass das ihnen entströmende Gas im oberen Bereich innerhalb des Hohlkörpers 30 eine im Wesentlichen laminare horizontale Gasströmung bildet. Durch die Gasabströmleitung 38 wird pro Zeiteinheit aus dem Hohlkörper mehr Gas abgeführt, als ihm pro Zeiteinheit durch die Gaszuströmöffnungen 32 zugeführt wird. Gas wird ferner durch die Gaszuströmöffnung 39 dem Bereich der Prozesskammer 3, der außerhalb des Hohlkörpers 30 liegt, zugeführt. In der Folge strömt Gas durch den Spalt 35 in den Bereich der Prozesskammer 3, der innerhalb des Hohlkörpers 30 liegt. Wenn der Hohlkörper 30 an seiner Oberseite offen ausgeführt ist und daher ein Spalt 36 zwischen der Oberseite des Hohlkörpers 30 und der Oberseite der Wandung 4 der Prozesskammer 3 vorhanden ist, strömt Gas auch durch den Spalt 36 in den Bereich der Prozesskammer 3, der innerhalb des Hohlkörpers 30 liegt.

Ein erster Anteil des über die Gaszuströmleitung 37 zugeführten Gases wird also über die Gaszuströmöffnungen 32 dem Inneren des Hohlkörpers zugeführt und ein zweiter Anteil des Gases wird über die Gaszuströmöffnung 39 in den Bereich der Prozesskammer 3 außerhalb des Hohlkörpers 30 geleitet. Dabei werden (in der Figur nicht erkennbar) der erste Anteil und der zweite Anteil des Gases aus einem gemeinsamen Gasstrom durch eine Gasabzweigung in einer Vorkammer (hier im rückwärtigen Bereich) des Hohlkörpers 30 voneinander abgezweigt. Es erfolgt also eine automatische Gasabzweigung und es ist in diesem Falle keine programmgesteuerte Führung von Gasströmen zwingend nötig.

Es ist also bevorzugt, dieselbe Gaszuströmleitung 37 sowohl über eine Gaszuströmöffnung 39 mit dem Bereich der Prozesskammer 3, der außerhalb des Hohlkörpers 30 liegt, als auch über Gaszuströmöffnungen 32 mit dem Bereich der Prozesskammer 3, der innerhalb des Hohlkörpers liegt, zu verbinden.

Im Rahmen der Erfindung wird in Betracht gezogen, eine oder mehrere Gaszuströmleitungen 37 über mehrere Gaszuströmöffnungen 39 mit dem Bereich der Prozesskammer 3, der außerhalb des Hohlkörpers 30 liegt, zu verbinden.

Im Rahmen der Erfindung wird in Betracht gezogen, eine oder mehrere Gasabströmleitungen 38 über mehrere Gasabströmöffnungen 34 mit dem Bereich der Prozesskammer 3, der innerhalb des Hohlkörpers 30 liegt, zu verbinden.

Die Merkmale der beiden Ausführungsformen können miteinander kombiniert oder gegeneinander ausgetauscht werden, wo dies sinnvoll ist. Beispielsweise kann zusätzlich oder alternativ zu der an der Wandung 31 des Hohlkörpers 30 vorgesehenen Gaszuströmöffnung 39 bei der in Fig. 3 dargestellten Ausführung an der Wandung 4 der Prozesskammer 3 eine Gaszuströmöffnung 33 vorgesehen sein.

Auch wenn die vorliegende Erfindung anhand einer Lasersinter- oder Laserschmelzvorrichtung 1 beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines Aufbaumaterials 15 angewendet werden. Das Aufbaumaterial 15 kann dabei pulverförmig sein, wie es beispielsweise beim Lasersintern oder Laserschmelzen der Fall ist. Als pulverförmiges Aufbaumaterial 15 können verschiedene Arten von Pulver verwendet werden, insbesondere Metallpulver, Kunststoffpulver, Keramikpulver, Sand, gefüllte oder gemischte Pulver. Das Aufbaumaterial 15 kann aber auch flüssig sein, wie es beispielsweise bei den unter dem Namen "Stereolithographie" bekannten Verfahren der Fall ist.

Die Bestrahlungseinrichtung 20 kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Bestrahlungseinrichtung 20 jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den dem Objektquerschnitt entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Als Gas, welches der Prozesskammer zugeführt wird, kann beispielsweise ein Edelgas, insbesondere Argon, Stickstoff oder ein anderes Schutzgas, insbesondere Inertgas verwendet werden. Auch die Verwendung von Wasserstoff oder einem anderen reduzierenden Gas, oder die Verwendung von (gereinigter und/oder getrockneter) Luft oder einem anderen oxidierenden Gas ist möglich. Auch Gemische verschiedener Gase können zum Einsatz kommen.

## Patentansprüche

1. Verfahren zum Herstellen eines dreidimensionalen Objekts (2) durch schichtweises Aufbringen und selektives Verfestigen eines Aufbaumaterials (15) mit den Schritten:
Aufbringen einer Schicht des Aufbaumaterials (15) auf ein Baufeld (8) in einer Prozesskammer (3),
selektives Verfestigen der Stellen der aufgebrachten Schicht, die dem Querschnitt des Objekts (2) in dieser Schicht entsprechen, mittels Einwirkung einer Strahlung und
Wiederholen der Schritte des Aufbringens und des selektiven Verfestigens, bis das dreidimensionale Objekt (2) fertiggestellt ist,
wobei in der Prozesskammer (3) oberhalb des Baufeldes (8) ein Hohlkörper (30) angeordnet ist, welcher sich im Wesentlichen vom Baufeld (8) in Richtung der Oberseite der Wandung (4) der Prozesskammer (3) erstreckt,
**dadurch gekennzeichnet, dass**
der Prozesskammer (3) derart Gas zugeführt wird und derart Gas aus der Prozesskammer (3) abgeführt wird, dass in dem Bereich der Prozesskammer (3), der innerhalb des Hohlkörpers (30) liegt, ein geringerer Druck herrscht als in dem Bereich der Prozesskammer (3), der außerhalb des Hohlkörpers (30) liegt,
wobei ein Gasdruck in dem Bereich der Prozesskammer (3), der außerhalb des Hohlkörpers (30) liegt, angelegt wird, der größer oder gleich dem Druck außerhalb der Prozesskammer ist und
wobei aufgrund des geringeren Drucks innerhalb des Hohlkörpers (30) Gas aus dem Bereich der Prozesskammer (3), der außerhalb des Hohlkörpers (30) liegt, durch einen Spalt (35) zwischen dem Baufeld (8) und der Unterseite des Hohlkörpers (30) in den Bereich der Prozesskammer (3), der innerhalb des Hohlkörpers (30) liegt, einströmt und/oder wobei aufgrund des geringeren Drucks innerhalb des Hohlkörpers (30) Gas aus dem Bereich der Prozesskammer (3), der außerhalb des Hohlkörpers (30) liegt, durch einen Spalt (36) zwischen der Oberseite der Wandung (4) der Prozesskammer (3) und der Oberseite des Hohlkörpers (30) in den Bereich der Prozesskammer (3), der innerhalb des Hohlkörpers (30) liegt, einströmt.

2. Verfahren gemäß Anspruch 1, wobei dem Hohlkörper (30) derart Gas zu- und oder abgeführt wird, dass innerhalb des Hohlkörpers (30) ein Gasdruck unterhalb des Drucks außerhalb der Prozesskammer vorliegt.

3. Verfahren gemäß einem der Ansprüche 1 bis 2, wobei die Strahlung mittels einer außerhalb der Prozesskammer (3) angeordneten Bestrahlungseinrichtung (20) erzeugt und durch ein an der Oberseite einer Wandung (4) der Prozesskammer (3) angeordnetes Einkoppelfenster (25) in die Prozesskammer (3) eingekoppelt wird.

4. Verfahren nach einem der Ansprüche 1 bis 3, wobei Gas durch eine Gasabströmleitung (38), die über eine Gasabströmöffnung (34) mit dem Inneren des Hohlkörpers (30) verbunden ist,aus der Prozesskammer (3) abgeführt wird.

5. Verfahren nach einem der Ansprüche 1 bis 4, wobei der Prozesskammer (3) Gas durch eine Gaszuströmleitung (37), die über eine Gaszuströmöffnung (33, 39) mit dem Bereich der Prozesskammer (3), der außerhalb des Hohlkörpers (30) liegt, verbunden ist, zugeführt wird.

6. Verfahren nach einem der Ansprüche 1 bis 5, wobei der Prozesskammer (3) Gas durch eine Gaszuströmleitung (37), die über eine Gaszuströmöffnung (32) mit dem Inneren des Hohlkörpers (30) verbunden ist, zugeführt wird.

7. Verfahren nach Anspruch 6, wobei das der Prozesskammer (3) durch die Gaszuströmöffnung (32) zugeführte Gas in Form einer im Wesentlichen laminaren Strömung durch den der Oberseite der Wandung (4) der Prozesskammer (3) benachbarten Bereich des Inneren des Hohlkörpers (30) geführt wird.

8. Verfahren nach einem der Ansprüche 6 oder 7, wobei ein erster Anteil des durch die Gaszuströmleitung (37) zugeführten Gases über die mit dem Inneren des Hohlkörpers (30) verbundene Gaszuströmöffnung (32) zugeführt wird und ein zweiter Anteil des Gases über eine an der Außenseite der Wandung (31) des Hohlkörpers (30) angeordnete Gaszuströmöffnung (39) in den Bereich der Prozesskammer (3) außerhalb des Hohlkörpers (30) geleitet wird.

9. Verfahren nach einem der Ansprüche 1 bis 8, wobei das Aufbringen einer Schicht des Aufbaumaterials (15) auf das Baufeld (8) mittels eines Beschichters (16) durchgeführt wird, welcher sich in einer horizontalen Richtung (H) bewegt, und
wobei der Hohlkörper (30) und der Beschichter (16) in ihrer Bewegung gekoppelt sind.

10. Computerprogramm, das in eine programmierbare Steuereinrichtung (29) ladbar ist, mit Programmcodemitteln, um alle Schritte eines Verfahrens nach einem der Ansprüche 1 bis 9 auszuführen, wenn das Computerprogramm auf der Steuereinrichtung (29) ausgeführt wird.

11. Steuereinrichtung (29) für eine Vorrichtung zum Herstellen eines dreidimensionalen Objekts (2) durch schichtweises Aufbringen und selektives Verfestigen eines Aufbaumaterials (15),
wobei die Steuereinrichtung ausgebildet ist, die Vorrichtung so zu steuern, dass die Vorrichtung im Betrieb folgende Schritte ausführt:
Aufbringen einer Schicht des Aufbaumaterials (15) auf ein Baufeld (8) in einer Prozesskammer (3),
selektives Verfestigen der Stellen der aufgebrachten Schicht, die dem Querschnitt des Objekts (2) in dieser Schicht entsprechen, mittels Einwirkung einer Strahlung und
Wiederholen der Schritte des Aufbringens und des selektiven Verfestigens, bis das dreidimensionale Objekt (2) fertiggestellt ist,
wobei in der Prozesskammer (3) oberhalb des Baufeldes (8) ein Hohlkörper (30) angeordnet ist, welcher sich im Wesentlichen vom Baufeld (8) in Richtung der Oberseite der Wandung (4) der Prozesskammer (3) erstreckt, und
wobei die Steuereinrichtung (29) ausgebildet ist, der Prozesskammer (3) derart Gas zuzuführen und derart Gas aus der Prozesskammer (3) abzuführen, dass in dem Bereich der Prozesskammer (3), der innerhalb des Hohlkörpers (30) liegt, ein geringerer Druck herrscht als in dem Bereich der Prozesskammer (3), der außerhalb des Hohlkörpers (30) liegt,
wobei ein Gasdruck in dem Bereich der Prozesskammer (3), der außerhalb des Hohlkörpers (30) liegt, angelegt wird, der größer oder gleich dem Druck außerhalb der Prozesskammer ist und
wobei aufgrund des geringeren Drucks innerhalb des Hohlkörpers (30) Gas aus dem Bereich der Prozesskammer (3), der außerhalb des Hohlkörpers (30) liegt, durch einen Spalt (35) zwischen dem Baufeld (8) und der Unterseite des Hohlkörpers (30) in den Bereich der Prozesskammer (3), der innerhalb des Hohlkörpers (30) liegt, einströmt und/oder wobei aufgrund des geringeren Drucks innerhalb des Hohlkörpers (30) Gas aus dem Bereich der Prozesskammer (3), der außerhalb des Hohlkörpers (30) liegt, durch einen Spalt (36) zwischen der Oberseite der Wandung (4) der Prozesskammer (3) und der Oberseite des Hohlkörpers (30) in den Bereich der Prozesskammer (3), der innerhalb des Hohlkörpers (30) liegt, einströmt.

12. Aus- und/oder Nachrüstsatz bestehend aus einem Hohlkörper (30), der für die Verwendung in einem Verfahren gemäß einem der Ansprüche 1 bis 9 geeignet ist, und einer Steuereinrichtung (29) gemäß Anspruch 11.

13. Vorrichtung (1) zum Herstellen eines dreidimensionalen Objekts (2) durch schichtweises Aufbringen und selektives Verfestigen eines Aufbaumaterials (15) mit:
einer Aufbringvorrichtung (16) zum Aufbringen einer Schicht des Aufbaumaterials (15) auf ein Baufeld (8) in einer Prozesskammer (3) der Vorrichtung,
einer Bestrahlungseinrichtung (20) zum selektiven Verfestigen der Stellen der aufgebrachten Schicht, die dem Querschnitt des Objekts (2) in dieser Schicht entsprechen, mittels Einwirkung einer Strahlung
und einem Aus-und/oder Nachrüstsatz gemäß Anspruch 12.

## Claims

1. Method of manufacturing a three-dimensional object (2) by layer-by-layer application and selective solidification of a building material (15), comprising the steps of:
applying a layer of the building material (15) to a build area (8) in a process chamber (3),
selectively solidifying those positions of the applied layer which correspond to the cross-section of the object (2) in this layer, by exposure to a radiation, and
repeating the steps of applying and selectively solidifying until the three-dimensional object (2) is completed,
wherein a hollow body (30) is arranged in the process chamber (3) above the build area (8), which hollow body (30) extends substantially from the build area (8) in a direction towards the upper side of the wall (4) of the process chamber (3),
**characterized in that** gas is supplied to the process chamber (3) in such a manner and gas is discharged from the process chamber (3) in such a manner that a lower pressure exists in the region of the process chamber (3) lying within the hollow body (30) than in the region of the process chamber (3) lying outside the hollow body (30),
wherein a gas pressure is applied to the region of the process chamber (3) lying outside the hollow body (30) that is greater than or equal to the pressure outside the process chamber and
wherein due to the lower pressure within the hollow body (30), gas flows from the region of the process chamber (3) lying outside the hollow body (30) through a gap (35) between the build area (8) and the lower side of the hollow body (30) into the region of the process chamber (3) lying within the hollow body (30) and/or wherein due to the lower pressure within the hollow body (30), gas flows from the region of the process chamber (3) lying outside the hollow body (30) through a gap (36) between the upper side of the wall (4) of the process chamber (3) and the upper side of the hollow body (30) into the region of the process chamber (3) lying within the hollow body (30).

2. Method according to claim 1, wherein gas is supplied to the hollow body (30) in such a manner and/or discharged from the hollow body (30) in such a manner that a gas pressure lower than the pressure outside the process chamber exists within the hollow body (30).

3. Method according to one of claims 1 to 2, wherein the radiation is generated by means of an irradiation device (20) arranged outside the process chamber (3) and coupled into the process chamber (3) through a coupling window (25) arranged at the upper side of a wall (4) of the process chamber (3).

4. Method according to one of claims 1 to 3, wherein gas is discharged from the process chamber (3) through a gas outlet line (38), which is connected to the inside of the hollow body (30) via a gas outlet opening (34).

5. Method according to one of claims 1 to 4, wherein gas is supplied to the process chamber (3) through a gas inlet line (37), which is connected to the region of the process chamber (3) lying outside the hollow body (30) via a gas inlet opening (33, 39).

6. Method according to one of claims 1 to 5, wherein gas is supplied to the process chamber (3) through a gas inlet line (37), which is connected to the inside of the hollow body (30) via a gas inlet opening (32).

7. Method according to claim 6, wherein the gas supplied to the process chamber (3) through the gas inlet opening (32) is directed in the form of a substantially laminar flow through the region of the inside of the hollow body (30) that is adjacent to the upper side of the wall (4) of the process chamber (3).

8. Method according to one of claims 6 or 7, wherein a first portion of the gas supplied through the gas inlet line (37) is supplied via the gas inlet opening (32) connected to the inside of the hollow body (30) and a second portion of the gas is directed into the region of the process chamber (3) outside the hollow body (30) via a gas inlet opening (39) arranged at the outer side of the wall (31) of the hollow body (30).

9. Method according to one of claims 1 to 8, wherein the application of a layer of the building material (15) to the build area (8) is performed by means of a recoater (16) which moves in a horizontal direction (H), and wherein the hollow body (30) and the recoater (16) are coupled with respect to their movement.

10. Computer program that is loadable into a programmable control device (29), having program code means in order to perform all steps of a method according to one of claims 1 to 9 when the computer program is executed in the control device (29) .

11. Control device (29) for an apparatus for manufacturing a three-dimensional object (2) by layer-by-layer application and selective solidification of a building material (15),
wherein the contol device is configured to contol the apparatus such that the apparatus performs the following steps during operation:
applying a layer of the building material (15) to a build area (8) in a process chamber (3),
selectively solidifying those positions of the applied layer which correspond to the cross-section of the object (2) in this layer by exposure to a radiation, and
repeating the steps of applying and selectively solidifying until the three-dimensional object (2) is completed,
wherein a hollow body (30) is arranged in the process chamber (3) above the build area (8), which hollow body (30) extends substantially from the build area (8) in a direction towards the upper side of the wall (4) of the process chamber (3), and
wherein the control device (29) is configured to supply gas to the process chamber (3) in such a manner and to discharge gas from the process chamber (3) in such a manner that a lower pressure exists in the region of the process chamber (3) lying within the hollow body (30) than in the region of the process chamber (3) lying outside the hollow body (30),
wherein a gas pressure is applied to the region of the process chamber (3) lying outside the hollow body (30) that is greater than or equal to the pressure outside the process chamber and
wherein due to the lower pressure within the hollow body (30), gas flows from the region of the process chamber (3) lying outside the hollow body (30) through a gap (35) between the build area (8) and the lower side of the hollow body (30) into the region of the process chamber (3) lying within the hollow body (30) and/or wherein due to the lower pressure within the hollow body (30), gas flows from the region of the process chamber (3) lying outside the hollow body (30) through a gap (36) between the upper side of the wall (4) of the process chamber (3) and the upper side of the hollow body (30) into the region of the process chamber (3) lying within the hollow body (30).

12. Equipment kit and/or upgrade kit consisting of a hollow body (30), which is suitable for use in a method according to one of claims 1 to 9, and a control device (29) according to claim 11.

13. An apparatus (1) for manufacturing a three-dimensional object (2) by layer-by-layer application and selective solidification of a building material (15), comprising:
an application device (16) for applying a layer of the building material (15) to a build area (8) in a process chamber (3) of the apparatus,
an irradiation device (20) for selectively solidifying those positions of the applied layer which correspond to the cross-section of the object (2) in this layer by exposure to a radiation,
and an equipment kit and/or upgrade kit according to claim 12.

## Revendications

1. Procédé de fabrication d'un objet tridimensionnel (2) par application et solidification sélective couche par couche d'un matériau de construction (15), comprenant les étapes :
appliquer une couche du matériau de construction (15) sur une zone de construction (8) dans une chambre de traitement (3),
solidifier sélectivement les positions de la couche appliquée qui correspondent à la section transversale de l'objet (2) dans cette couche, au moyen de l'action d'un rayonnement, et
répéter les étapes d'application et de solidification sélective jusqu'à ce que l'objet tridimensionnel (2) soit complété,
dans lequel un corps creux (30) est disposé dans la chambre de traitement (3) au-dessus de la zone de construction (8), qui s'étend sensiblement depuis la zone de construction (8) en direction du côté supérieur de la paroi (4) de la chambre de traitement (3),
**caractérisé en ce que**
la chambre de traitement (3) est alimentée en gaz et le gaz est évacué de la chambre de traitement (3) de telle sorte qu'il y a une pression plus faible dans la zone de la chambre de traitement (3) qui se trouve à l'intérieur du corps creux (30) que dans la zone de la chambre de traitement (3) qui se trouve à l'extérieur du corps creux (30),
dans lequel une pression de gaz est appliquée dans la zone de la chambre de traitement (3) située à l'extérieur du corps creux (30), qui est supérieure ou égale à la pression à l'extérieur de la chambre de traitement, et
dans lequel, en raison de la pression plus faible à l'intérieur du corps creux (30), du gaz pénètre de la zone de la chambre de traitement (3) qui se trouve à l'extérieur du corps creux (30), à travers une fente (35) entre la zone de construction (8) et la face inférieure du corps creux (30), dans la zone de la chambre de traitement (3) qui se trouve à l'intérieur du corps creux (30), et/ou dans lequel, en raison de la pression plus faible à l'intérieur du corps creux (30), du gaz pénètre de la zone de la chambre de traitement (3) qui se trouve à l'extérieur du corps creux (30), à travers une fente (36) entre la face supérieure de la paroi (4) de la chambre de traitement (3) et la face supérieure du corps creux (30), dans la zone de la chambre de traitement (3) qui se trouve à l'intérieur du corps creux (30).

2. Procédé selon la revendication 1, dans lequel du gaz est amené au corps creux (30) ou évacué de celui-ci de telle sorte qu'il existe à l'intérieur du corps creux (30) une pression de gaz inférieure à la pression à l'extérieur de la chambre de traitement.

3. Procédé selon l'une des revendications 1 à 2, dans lequel le rayonnement est généré au moyen d'un dispositif d'irradiation (20) disposé à l'extérieur de la chambre de traitement (3) et est introduit dans la chambre de traitement (3) à travers une fenêtre d'introduction (25) disposée sur la face supérieure d'une paroi (4) de la chambre de traitement (3).

4. Procédé selon l'une des revendications 1 à 3, dans lequel du gaz est évacué de la chambre de traitement (3) par un conduit d'évacuation de gaz (38) qui est relié à l'intérieur du corps creux (30) par un orifice d'évacuation de gaz (34).

5. Procédé selon l'une des revendications 1 à 4, dans lequel la chambre de traitement (3) est alimentée en gaz par un conduit d'alimentation de gaz (37) qui est relié par un orifice d'admission de gaz (33, 39) à la zone de la chambre de traitement (3) située à l'extérieur du corps creux (30).

6. Procédé selon l'une des revendications 1 à 5, dans lequel la chambre de traitement (3) est alimentée en gaz par un conduit d'alimentation de gaz (37) qui est reliée par un orifice d'admission de gaz (32) à l'intérieur du corps creux (30).

7. Procédé selon la revendication 6, dans lequel le gaz fourni à la chambre de traitement (3) par l'orifice d'admission de gaz (32) est conduit sous la forme d'un écoulement sensiblement laminaire à travers la zone de l'intérieur du corps creux (30) adjacente à la face supérieure de la paroi (4) de la chambre de traitement (3).

8. Procédé selon l'une des revendications 6 ou 7, dans lequel une première partie du gaz amené par le conduit d'alimentation de gaz (37) est amenée par l'ouverture d'admission de gaz (32) reliée à l'intérieur du corps creux (30) et une seconde partie du gaz est amenée par une ouverture d'admission de gaz (39) disposée à l'extérieur de la paroi (31) du corps creux (30) dans la zone de la chambre de traitement (3) extérieure au corps creux (30).

9. Procédé selon l'une des revendications 1 à 8, dans lequel l'application d'une couche du matériau de construction (15) sur la zone de construction (8) est réalisée au moyen d'un enducteur (16) se déplaçant selon une direction horizontale (H), et
dans lequel le corps creux (30) et l'enducteur (16) sont couplés dans leur mouvement.

10. Programme d'ordinateur qui est chargeable dans un dispositif de commande programmable (29) et qui comprend des moyens de code de programme pour exécuter toutes les étapes d'un procédé selon l'une des revendications 1 à 9, lorsque le programme d'ordinateur est exécuté sur le dispositif de commande (29).

11. Dispositif de commande (29) pour un appareil pour fabriquer un objet tridimensionnel (2) par application et solidification sélective couche par couche d'un matériau de construction (15),
le dispositif de commande étant configuré pour commander l'appareil de telle sorte que, en fonctionnement, l'appareil exécute les étapes suivantes :
appliquer une couche du matériau de construction (15) sur une zone de construction (8) dans une chambre de traitement (3),
solidifier sélectivement les positions de la couche appliquée qui correspondent à la section transversale de l'objet (2) dans cette couche, au moyen de l'action d'un rayonnement, et
répéter les étapes d'application et de solidification sélective jusqu'à ce que l'objet tridimensionnel (2) soit complété,
dans lequel un corps creux (30) est disposé dans la chambre de traitement (3) au-dessus de la zone de construction (8), qui s'étend sensiblement depuis la zone de construction (8) en direction du côté supérieur de la paroi (4) de la chambre de traitement (3), et
dans lequel le dispositif de commande (29) est configuré pour amener du gaz à la chambre de traitement (3) et pour évacuer du gaz de la chambre de traitement (3) de telle sorte qu'il y a une pression plus faible dans la zone de la chambre de traitement (3) qui se trouve à l'intérieur du corps creux (30) que dans la zone de la chambre de traitement (3) qui se trouve à l'extérieur du corps creux (30),
dans lequel une pression de gaz supérieure ou égale à la pression à l'extérieur de la chambre de traitement est appliquée dans la zone de la chambre de traitement (3) située à l'extérieur du corps creux (30), et
dans lequel, en raison de la pression plus faible à l'intérieur du corps creux (30), du gaz pénètre de la zone de la chambre de traitement (3) qui se trouve à l'extérieur du corps creux (30), à travers une fente (35) entre la zone de construction (8) et le côté inférieur du corps creux (30), et/ou dans lequel, en raison de la pression plus faible à l'intérieur du corps creux (30), dans la zone de la chambre de traitement (3) qui se trouve à l'intérieur du corps creux (30), et/ou dans lequel, en raison de la pression plus faible à l'intérieur du corps creux (30), du gaz pénètre de la zone de la chambre de traitement (3) qui se trouve à l'extérieur du corps creux (30), à travers une fente (36) entre la face supérieure de la paroi (4) de la chambre de traitement (3) et la face supérieure du corps creux (30), dans la zone de la chambre de traitement (3) qui se trouve à l'intérieur du corps creux (30).

12. Kit d'équipement et/ou de mise à jour comprenant un corps creux (30) qui est adapté pour être utilisé dans un procédé selon l'une quelconque des revendications 1 à 9, et un dispositif de commande (29) selon la revendication 11.

13. Appareil (1) pour fabriquer un objet tridimensionnel (2) par application et solidification sélective couche par couche d'un matériau de construction (15) comprenant :
un dispositif d'application (16) pour appliquer une couche du matériau de construction (15) sur une zone de construction (8) dans une chambre de traitement (3) de l'appareil,
un dispositif d'irradiation (20) pour solidifier sélectivement les positions de la couche appliquée qui correspondent à la section transversale de l'objet (2) dans cette couche, au moyen de l'action d'un rayonnement
et un kit d'équipement et/ou de mise à jour selon la revendication 12.
